# EUROPEAN PATENT APPLICATION

(11) **EP 1 538 405 A2**
(43) Date of publication of application: **08.06.2005**
(21) Application number: 04027900.2
(22) Date of filing: 24.11.2004
(51) Int. Cl.: F25B 9/00, F25B 40/00

(54) **Refrigeration cycle apparatus**

(30) Priority: 01.12.2003 JP 2003402241
(71) Applicant: MATSUSHITA ELECTRIC INDUSTRIAL CO., LTD., Kadoma-shi, Osaka 571-8501 (JP)
(72) Inventor: Okaza, Noriho, Ibaraki-shi Osaka 567-0046 (JP)
(74) Representative: Körfer, Thomas, Dipl.-Phys.

(57) **Abstract**

A refrigeration cycle apparatus has a refrigerant circuit A. The refrigerant circuit A comprises a compressor 11, a refrigerant passage 12a of a radiator 12 as a water heating heat exchanger, a high pressure side refrigerant passage 15a of internal heat exchanging means 15, a decompressor 13, an evaporator 14, and a low pressure side refrigerant passage 15b of the internal heat exchanging means 15. In the refrigeration cycle apparatus, a pressure detecting apparatus 24 detects that a high pressure side pressure rises to about design pressure, a first solenoid valve 17 provided in a bypass circuit 16 is controlled, by a solenoid valve control apparatus 25, so as to be closed, a low pressure side refrigerant is allowed to flow into the low pressure side refrigerant passage 15b between an outlet of the evaporator 14 and an inlet of the compressor 11, a high pressure side refrigerant flowing through the high pressure side refrigerant passage 15a between an outlet of the radiator 12 and an inlet of the decompressor 13 is cooled, thereby reducing a high pressure side pressure.

## Description

### Technical Field

The present invention relates to a refrigeration cycle apparatus using a refrigerant which can be brought into a supercritical state on a high pressure side as a refrigerant.

### Background Technique

Conventionally, as a refrigerant charged into a refrigeration cycle apparatus, hydrocarbon-based element (flon-based element) containing fluorine atom is used. However, the flon-based element has characteristics to destroy ozone layer and since its lifetime in the atmosphere is long, its greenhouse effect.is great and thus, the flon-based element adversely affects the global warming. Therefore, the flon-based element is not always satisfactory refrigerant. For this reason, it is proposed to use as a refrigerant, instead of flon-based element, carbon dioxide or ethane whose ozone destruction coefficient is zero and which has extremely smaller global warming coefficient as compared with the flon-based element (see Patent Document 1 [Japanese Patent Publication No.H7-18602] for example).

A refrigerant such as carbon dioxide and ethane has a lower critical temperature, condensation does not occur on a high pressure side (compressor outlet, radiator, decompressor inlet) of the conventional refrigeration cycle apparatus, and the cycle is brought into a supercritical cycle where the operation is carried out at critical pressure or higher. Therefore, thepressureonthehighpressuresidecanarbitrarily be adjusted irrespective of the temperature of the refrigerant on the high pressure side, and the pressure is usually adjusted such that the efficient of the refrigeration cycle apparatus becomes optimal.

Thehighpressure side pressure canbe adjustedby changing the mass of the refrigerant on the high pressure side, i.e., by changing a refrigerant hold amount on the high pressure side. As a method for adjusting the high pressure side pressure, Patent Document 1 proposes a method in which the remaining amount of liquid inabuffering refrigerant receiver is variedby adjusting an opening of a decompressor, thereby changing the refrigerant hold amount, i.e., a method in which a liquid refrigerant stored in a receiver is added to the high pressure side or eliminated.

It is described in Patent Document 1 that a counter current type heat exchanger 12 shown in Fig. 2 is not absolutely necessary for achieving the ability of this apparatus, but the counter current type heat exchanger 12 enhances the efficiency of the apparatus, especially ability increasing requirement. The counter current type heat exchanger 12 is not provided for adjusting the refrigerant hold amount on the high pressure side but is provided for enhancing the efficiency.

In the case of the conventional technique shown in Patent Document 1, in order to store a liquid refrigerant, a receiver or an accumulator having relatively great capacity is required, and there is a problem that the apparatus is increased in size.

For this reason, various researches have been made using refrigeration cycle apparatuses having no receiver or accumulator. As a resul t, it was found that in a normal operation state, if an opening of a decompressor is adjusted, the high pressure side pressure can be adjusted in some degree by changing the ratio of the hold amount of the low pressure side and the hold amount of the high pressure side, but when the temperature of fluid (inside air and outside air in the case of an air conditioner, and water in the case of a water heater for example) whose heat is radiated by a radiator is high, the high pressure side pressure is abnormally increased, and there is a problem that the reliability of the refrigeration cycle apparatus is deteriorated.

The present invention has been accomplished to solve the above problems, and it is an object of the invention to provide a refrigeration cycle apparatus capable of avoiding the abnormal high temperature using another means to solve the problem of the reliability, and capable of reducing the apparatus in size without using refrigerant amount adjusting means such as the receiver or the accumulator.

### Disclosure of the Invention

A first aspect of the present invention provides a refrigeration cycle apparatus which uses a refrigerant that can be brought into a supercritical state on a high pressure side and which comprises a compressor, a radiator, a decompressor and an evaporator, and which does not have refrigerant amount adjusting means, wherein the refrigeration cycle apparatus further comprises internal heat exchanging means for cooling the refrigerant between an outlet of the radiator and an inlet of the decompressor.

According to this aspect, when the temperature of fluid flowing into the radiator becomes high and the high pressure side pressure rises to about the design pressure, the high pressure side refrigerant between the outlet of the radiator and the inlet of the decompressor is cooled, and the density of the high pressure side refrigerant is increase. Thus, the high pressure side pressure can be reduced. Therefore, it is possible to suppress the abnormal rise of the high pressure side pressure, and to reduce the apparatus in size without deteriorating the reliability.

According to a second aspect of the invention, in the refrigeration cycle apparatus of the first aspect, the internal heat exchanging means cools the refrigerant between the outlet of the radiator and the inlet of the decompressor by means of a refrigerant between an outlet of the evaporator and an inlet of the compressor.

According to this aspect, when the high pressure side pressure rises to about the design pressure, the high pressure side refrigerant between the outlet of the radiator and the inlet of the decompressor is cooled. Thus, the high pressure side pressure can be reduced. Therefore, it is possible to suppress the abnormal rise of the high pressure side pressure, and to reduce the apparatus in size without deteriorating the reliability.

According to a third aspect of the invention, in the refrigeration cycle apparatus of the first aspect, the internal heat exchanging means cools the refrigerant between the outlet of the radiator and the inlet of the decompressor by means of a refrigerant between an outlet of the decompressor and an inlet of the evaporator.

According to this aspect, when the high pressure side pressure rises to about the design pressure, the high pressure side refrigerant between the outlet of the radiator and the inlet of the decompressor is cooled. Thus, the high pressure side pressure can be reduced. Therefore, it is possible to suppress the abnormal rise of the high pressure side pressure, and to reduce the apparatus in size without deteriorating the reliability.

According to a fourth aspect of the invention, in the refrigeration cycle apparatus of the first aspect, the internal heat exchanging means cools the refrigerant between the outlet of the radiator and the inlet of the decompressor by means of a portion of a refrigerant coming out from the radiator and decompressed by a second decompressor.

According to this aspect, when the high pressure side pressure rises to about the design pressure, the high pressure side refrigerant between the outlet of the radiator and the inlet of the decompressor is cooled. Thus, the high pressure side pressure can be reduced. Therefore, it is possible to suppress the abnormal rise of the high pressure side pressure, and to reduce the apparatus in size without deteriorating the reliability.

According to a fifth aspect of the invention, the refrigeration cycle apparatus of the first aspect further comprises pressure detecting means for detecting a high pressure side pressure, and control means which substantially operates the internal heat exchanging means when a pressure detected by the pressure detecting means rises to about a design pressure.

According to this aspect, when the high pressure side pressure rises to about the design pressure, the high pressure side refrigerant is cooled by the low pressure side refrigerant, and the density of the highpressure side refrigerant is increased. Thus, the high pressure side pressure can be reduced. Therefore, it is possible to suppress the abnormal rise of the high pressure side pressure, and to reduce the apparatus in size without deteriorating the reliability.

According to a sixth aspect of the invention, the refrigeration cycle apparatus of the second aspect further comprises a bypass circuit for bypassing the internal heat exchanging means, a first solenoid valve which controls a flow of a refrigerant in the bypass circuit, pressure detecting means for detecting a high pressure side pressure, and control means for closing the first solenoid valve when a pressure detected by the pressure detecting means rises to about a design pressure.

According to this aspect, since the control means for closing the first solenoid valve is provided, the high pressure side refrigerant between the outlet of the radiator and the inlet of the decompressor can be cooled and the high pressure side pressure can be reduced. Therefore, it is possible to suppress the abnormal rise of the high pressure side pressure, and to reduce the apparatus in size without deteriorating the reliability.

According to a seventh aspect of the invention, the refrigeration cycle apparatus of the third aspect further comprises a bypass circuit for bypassing the internal heat exchanging means, a second solenoid valve which controls a flow of a refrigerant in the bypass circuit, pressure detecting means for detecting a high pressure side pressure, and control means for closing the second solenoid valve when a pressure detected by the pressure detecting means rises to about a design pressure.

According to this aspect, since the control means for closing the second solenoid valve is provided, the high pressure side refrigerant between the outlet of the radiator and the inlet of the decompressor can be cooled and the high pressure side pressure can be reduced. Therefore, it is possible to suppress the abnormal rise of the high pressure side pressure, and to reduce the apparatus in size without deteriorating the reliability.

According to an eighth aspect of the invention, the refrigeration cycle apparatus of the fourth aspect further comprises pressure detecting means for detecting a high pressure side pressure, and control means which adjusts an opening of the second decompressor when a pressure detected by the pressure detecting means rises to about a design pressure.

According to this aspect, the high pressure side refrigerant between the outlet of the radiator and the inlet of the decompressor can be cooled by providing the control means for adjusting the opening of the second decompressor and the high pressure side pressure can be reduced. Therefore, it is possible to suppress the abnormal rise of the high pressure side pressure, and to reduce the apparatus in size without deteriorating the reliability.

According to a ninth aspect of the invention, the refrigeration cycle apparatus of any one of the first to fourth aspects further comprises pressure detecting means for detecting a high pressure side pressure, and control means which reduces the number of revolutions of a fan of the evaporator when a pressure detected by the pressure detecting means rises to about a design pressure.

According to this aspect, the high pressure side refrigerant between the outlet of the radiator and the inlet of the decompressor can be cooled by providing the control means for reducing the number of revolutions of the fan of the evaporator and the high pressure side pressure can be reduced. Therefore, it is possible to suppress the abnormal rise of the high pressure side pressure, and to reduce the apparatus in size without deteriorating the reliability.

### Brief Description of the Drawings

Fig. 1 is a block diagram showing a refrigeration cycle apparatus of a first embodiment of the present invention;
Fig. 2 is a block diagram showing the refrigeration cycle apparatus of a second embodiment of the invention;
Fig. 3 is a block diagram showing the refrigeration cycle apparatus of a third embodiment of the invention;
Fig. 4 is a block diagram showing the refrigeration cycle apparatus of a fourth embodiment of the invention; and
Fig. 5 is a block diagram of an internal heat exchanging means shown in Fig. 4.

### Best Mode for Carrying Out the Invention

### (First Embodiment)

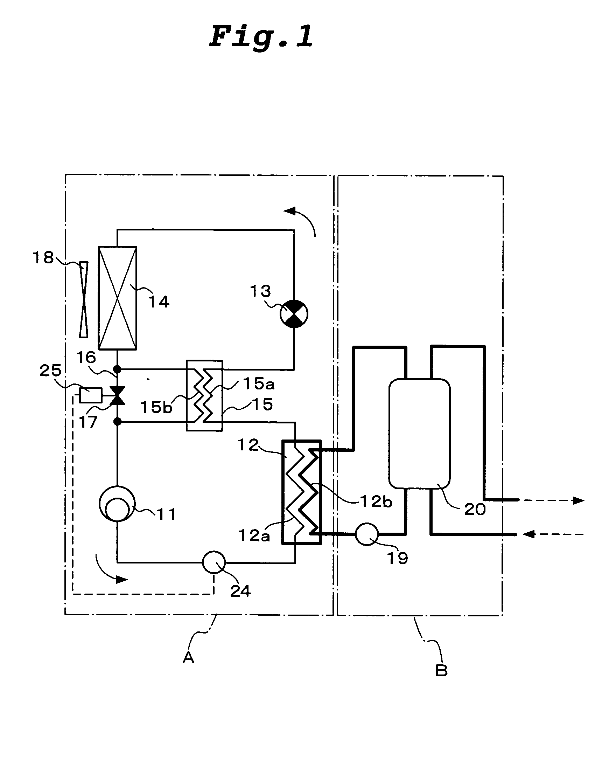

A refrigeration cycle apparatus of embodiments of the present invention will be explained with reference to the drawings while taking the case of a water heater. The invention is not limited to the embodiments. Fig. 1 is a block diagram showing a refrigeration cycle apparatus of a first embodiment of the invention.

The refrigeration cycle apparatus of the first embodiment has a refrigerant circuit A and a fluid circuit B. The refrigerant circuit A comprises a compressor 11, a refrigerant passage 12a of a radiator 12 as a water heating heat exchanger, a high pressure side refrigerant passage 15a of internal heat exchanging means 15, a decompressor 13, an evaporator 14, and a low pressure side refrigerant passage 15b of the internal heat exchanging means 15. The fluid circuit B comprises a feed water pump 19, a fluid passage 12b of the radiator 12, and a boiler 20.

In the refrigerant circuit A, the high pressure side refrigerant passage 15a of the internal heat exchanging means 15 is disposed between an outlet of the radiator 12 (refrigerant passage 12a) and an inlet of the decompressor 13, the lowpressure side refrigerant passage 15b is disposed between an outlet of the evaporator 14 and an inlet of the compressor 11, and a high pressure side refrigerant flowing through the high pressure side refrigerant passage 15a between the outlet of the radiator 12 (refrigerant passage 12a) and the inlet of the decompressor 13 is cooled by a low pressure side refrigerant flowing through the low pressure side refrigerant passage 15b between the outlet of the evaporator 14 and the inlet of the compressor 11. The refrigerant circuit A further comprises a bypass circuit 16 which bypasses the low pressure side refrigerant passage 15b, a first solenoid valve 17 provided in the bypass circuit 16, a pressure detecting apparatus 24 for detecting the high pressure side pressure, and a solenoid valve control apparatus 25 which controls an opening of the first solenoid valve 17 based on the pressure detected by the pressure detecting apparatus 24. The refrigerant circuit A further comprises a fan 18 which blows outside air on the evaporator 14.

Next, the operation of the refrigeration cycle apparatus having the above-described structure will be explained.

In the fluid circuit B, fluid (e.g., water) sent from a bottom of the boiler 20 to the fluid passage 12b of the radiator 12 by the feed water pump 19 is heated by a refrigerant flowing through the refrigerant passage 12a andbecomes high temperature fluid (e.g., hot water), and the high temperature fluid is introduced from a top of the boiler 20 and is stored in the boiler 20.

On the other hand, in the refrigerant circuit A, carbon dioxide which is a refrigerant is compressed by the compressor 11 until its pressure exceeds a critical pressure. The compressed refrigerant is brought into a high temperature and high pressure state, and the heat of the refrigerant is radiated by water flowing through the fluid passage 12b when the refrigerant flows through the refrigerant passage 12a of the radiator 12, and the refrigerant is cooled. The refrigerant is supplied to the high pressure side refrigerant passage 15a of the internal heat exchanging means 15. Thereafter, the refrigerant is decompressedby the decompressor 13 and is brought into a low temperature and low pressure gas-liquid double phase state, and is supplied to the evaporator 14. In the evaporator 14, the refrigerant is heated by outside air sent by the fan 18, and the refrigerant is brought into the gas-liquid double phase state or gas state.

Here, in a normal operating state, the first solenoid valve 17 provided in the bypass circuit 16 is controlled so as to be opened. Therefore, the low temperature refrigerant which flowed out from the evaporator 14 does not flow through the low pressure side refrigerant passage 15b of the internal heat exchanging means 15 almost at all, and mainly flows through the bypass circuit 16 and is sucked into the compressor 11. That is, the refrigerant flowing through the high pressure side refrigerant passage 15a of the internal heat exchanging means 15 is not cooled almost at all and flows into the decompressor 13. In such a case, the high pressure side pressure is adjusted by adjusting the opening of the decompressor 13 to change the rate of the hold amount on the low pressure side and the hold amount on the high pressure side.

On the other hand, if high temperature water is stored up to the bottom of the boiler 20, since the temperature of water flowing into the fluid passage 12b of the radiator 12 becomes high, the high pressure side pressure adversely rises to about the design pressure in some cases.

In such a case, the first solenoid valve 17 provided in the bypass circuit 16 is controlled, by the pressure detecting apparatus 24 and the solenoid valve control apparatus 25, so as to be closed. Therefore, the low temperature refrigerant which flowed out from the evaporator 14 flows into the low pressure side refrigerant passage 15b of the internal heat exchanging means 15, and cools a refrigerant flowing through the high pressure side refrigerant passage 15a and then, is sucked into the compressor 11. In this case, since the refrigerant flowing through the high pressure side refrigerant passage 15a is cooled, the density of the high pressure side refrigerant is increased. Therefore, even if the hold amount on the high pressure side is the same, the high pressure side pressure can be reduced.

In the refrigeration cycle apparatus having the above structure, the following effects can be obtained. That is, even if the refrigerant amount adjusting means such as the receiver and the accumulator is not provided, when the high pressure side pressure rises to about the design pressure, a refrigerant between the outlet of the radiator 12 (refrigerant passage 12a) and the inlet of the decompressor 13 can be cooled by the refrigerant between the outlet of the evaporator 14 and the inlet of the compressor 11 by exercising the control such that the first solenoid valve 17 is closed, and the density of the high pressure side refrigerant can be increased. Thus, even if the hold amount on the high pressure side is the same, the high pressure side pressure can be reduced. Therefore, it is possible to provide a refrigeration cycle apparatus capable of suppressing the abnormal rise of the high pressure side pressure, and capable of reducing the apparatus in size without deteriorating the reliability.

Although the bypass circuit 16 bypasses the low pressure side refrigerant passage 15b of the internal heat exchanging means 15 in this embodiment, the bypass circuit 16 may bypass the high pressure side refrigerant passage 15a. Alternately, the bypass circuit 16 may bypass both the low pressure side refrigerant passage 15b and high pressure side refrigerant passage 15a. The first solenoid valve 17 may be an expansion valve whose opening can be adjusted, and an amount of flow of the refrigerant flowing into the low pressure side refrigerant passage 15b of the internal heat exchanging means 15 may be adjusted to adjust the heat exchange amount in the internal heat exchanging means 15.

### (Second Embodiment)

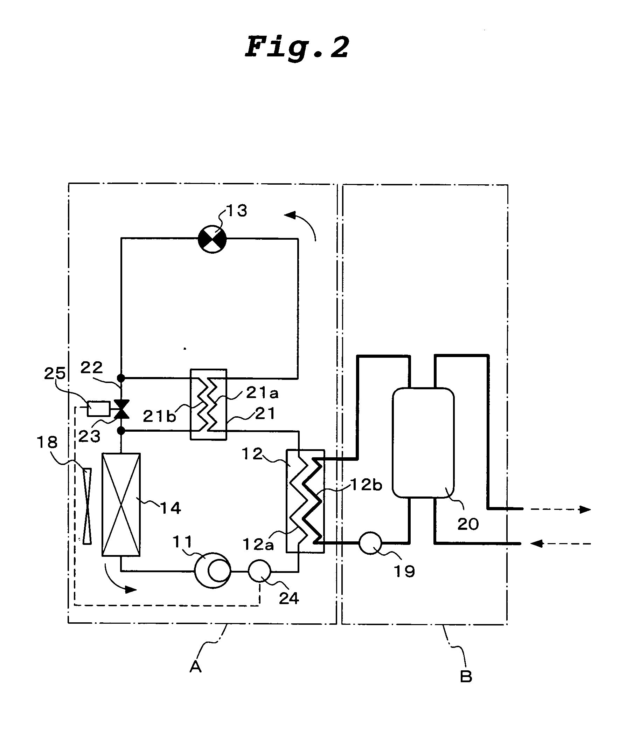

Fig. 2 is a block diagram showing the refrigeration cycle apparatus of a second embodiment of the invention. In the second embodiment, the same constituent elements as those of the first embodiment are designated with the same symbols, explanation thereof will omitted, and the structure and the operation of the second embodiment which are different from those of the first embodiment will be explained.

In the refrigeration cycle apparatus of the second embodiment, a high pressure side refrigerant passage 21a of the internal heat exchanging means 21 is disposed between the outlet of the radiator 12 (refrigerant passage 12a) and the inlet of the decompressor 13, and a low pressure side refrigerant passage 21b is disposed between the outlet of the decompressor 13 and the inlet of the evaporator 14. The high pressure side refrigerant flowing through the high pressure side refrigerant passage 21a between the outlet of the radiator 12 (refrigerant passage 12a) and the inlet of the decompressor 13 is cooled by the low pressure side refrigerant flowing through the low pressure side refrigerant passage 21b between the outlet of the decompressor 13 and the inlet of the evaporator 14. The refrigeration cycle apparatus further comprises a bypass circuit 22 which bypasses the low pressure side refrigerant passage 21b, a second solenoid valve 23 provided in the bypass circuit 22, and a solenoid valve control apparatus 25 for controlling the second solenoid valve 23 based on a pressure detected by the pressure detecting apparatus 24.

Next, the operation of the refrigeration cycle apparatus having the above structure will be explained.

In a normal operating state, the second solenoid valve 23 provided in the bypass circuit 22 is controlled so as to be opened. Therefore, the low temperature refrigerant which flowed out from the decompressor 13 does not flow through the low pressure side refrigerant passage 21b of the internal heat exchanging means 21 almost at all, and mainly flows through the bypass circuit 22 and flows into the evaporator 14. That is, the refrigerant flowing through the high pressure side refrigerant passage 21a of the internal heat exchanging means 21 is not cooled almost at all and flows into the decompressor 13.

Like the first embodiment, in an operating state in which thehighpressure sidepressure rises to about the designpressure, the second solenoid valve 23 provided in the bypass circuit 22 is controlled, by the pressure detecting apparatus 24 and the solenoid valve control apparatus 25, so as to be closed. Therefore, the low temperature refrigerant which flowed out from the decompressor 13 flows into the low pressure side refrigerant passage 21b of the internal heat exchanging means 21, and cools the refrigerant flowing through the high pressure side refrigerant passage 21a and then, flows into the evaporator 14. In this case, the refrigerant flowing through the high pressure side refrigerant passage 21a is cooled and thus, the density of the high pressure side refrigerant is increased. Therefore, even if the hold amount on the high pressure side is the same, the high pressure side pressure can be reduced.

In the refrigeration cycle apparatus having the above structure, the following effects can be obtained. That is, even if the refrigerant amount adjusting means such as the receiver and the accumulator is not provided, when the high pressure side pressure rises to about the design pressure, a refrigerant between the outlet of the radiator 12 (refrigerant passage 12a) and the inlet of the decompressor 13 can be cooled by the refrigerant between the outlet of the decompressor 13 and the inlet of the evaporator 14 by exercising the control such that the second solenoid valve 23 is closed, and the density of the high pressure side refrigerant can be increased. Thus, even if the hold amount on the high pressure side is the same, the high pressure side pressure can be reduced. Therefore, it is possible to suppress the abnormal rise of the high pressure side pressure, and to reduce the apparatus in size without deteriorating the reliability.

Although the bypass circuit 22 bypasses the low pressure side refrigerant passage 22b of the internal heat exchanging means 22 in this embodiment, the bypass circuit 22 may bypass the high pressure side refrigerant passage 22a. Alternately, the bypass circuit 22 may bypass both the low pressure side refrigerant passage 22b and high pressure side refrigerant passage 22a. The second solenoid valve 23 may be an expansion valve whose opening can be adjusted, and an amount of flow of the refrigerant flowing into the low pressure side refrigerant passage 22b of the internal heat exchanging means 22 may be adjusted to adjust the heat exchange amount in the internal heat exchanging means 22.

### (Third Embodiment)

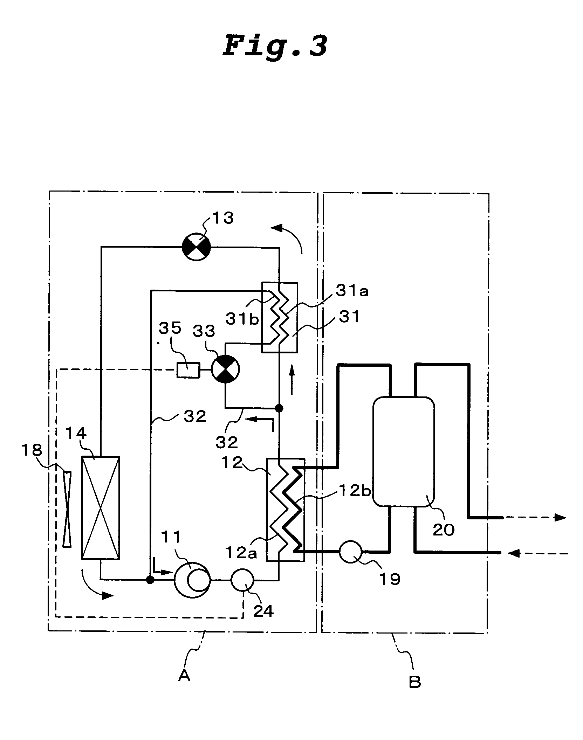

Fig. 3 is a block diagram showing the refrigeration cycle apparatus of a third embodiment of the invention. In the third embodiment, the same constituent elements as those of the first embodiment are designated with the same symbols, explanation thereof will omitted, and the structure and the operation of the third embodiment which are different from those of the first embodiment will be explained.

In the refrigeration cycle apparatus of the third embodiment, a high pressure side refrigerant passage 31a of internal heat exchanging means 31 is disposed between the outlet of the radiator 12. (refrigerant passage 12a) and the inlet of the decompressor 13, a low pressure side refrigerant passage 31b is branched off between the radiator 12 (refrigerant passage 12a) and the high pressure side refrigerant passage 31a of the internal heat exchanging means 31, and the low pressure side refrigerant passage 31b is disposed in a bypass circuit 32 which is connected between the evaporator 14 and the compressor 11 through a second decompressor 33. The high pressure side refrigerant flowing through the high pressure side refrigerant passage 31a between the outlet of the radiator 12 (refrigerant passage 12a) and the inlet of the decompressor 13 is cooled by the low pressure side refrigerant which flowed out from the radiator 12 (refrigerant passage 12a) and branched into the bypass circuit 32, and was decompressed by the second decompressor 33, and flowed into the low pressure side refrigerant passage 31b. The refrigeration cycle apparatus further comprises a decompressor control apparatus 35 which controls the second decompressor 33 based on a pressure detected by the pressure detecting apparatus 24.

Next, the operation of the refrigeration cycle apparatus having the above-described structure will be explained.

In a normal operating state, the second decompressor 33 is controlled so as to be fully opened. Thus, the refrigerant flowing out from the radiator 12 (refrigerant passage 12a) does not flow through the low pressure side refrigerant passage 31b of the internal heat exchanging means 31, but flows into the high pressure side refrigerant passage 31a of the internal heat exchanging means 31. Therefore, this refrigerant flows into the decompressor 13 without being cooled.

On the other hand, when the high pressure side pressure adversely rises to about the design pressure, control is exercised by the pressure detecting apparatus 24 and the decompressor control apparatus 35 such that the opening of the second decompressor 33 is between a state close to a closed state (fully closed state is not included) and a fully opened state. Thus, a portion of the refrigerant which flowed out from the radiator .12 (refrigerant passage 12a) branches into the bypass circuit 32, and is decompressed by the second decompressor 33 and becomes a low temperature refrigerant, and flows into the low pressure side refrigerant passage 31b of the internal heat exchanging means 31, and cools a refrigerant flowing through the high pressure side refrigerant passage 31a and then, is sucked into the compressor 11. In this case, the refrigerant flowing through the high pressure side refrigerant passage 31a is cooled and thus, the density of the high pressure side refrigerant is increased. Therefore, even if the hold amount on the high pressure side is the same, the high pressure side pressure can be reduced.

In the refrigeration cycle apparatus having the above structure, the following effects can be obtained. That is, even if the refrigerant amount adjusting means such as the receiver and the accumulator is not provided, when the high pressure side pressure rises to about the design pressure, the opening of the second decompressor 33 is adjusted, the refrigerant between the radiator 12 (refrigerant passage 12a) and the inlet of the decompressor 13 is cooled by the refrigerant which partially branched off from a refrigerant flowing out from the radiator 12 (refrigerant passage 12a) and which is decompressed by the second decompressor 33, thereby increasing the density of the high pressure side refrigerant. Thus, even if the hold amount on the high pressure side is the same, the high pressure side pressure can be reduced. Therefore, it is possible to suppress the abnormal rise of the high pressure side pressure, and to reduce the apparatus in size without deteriorating the reliability.

### (Fourth Embodiment)

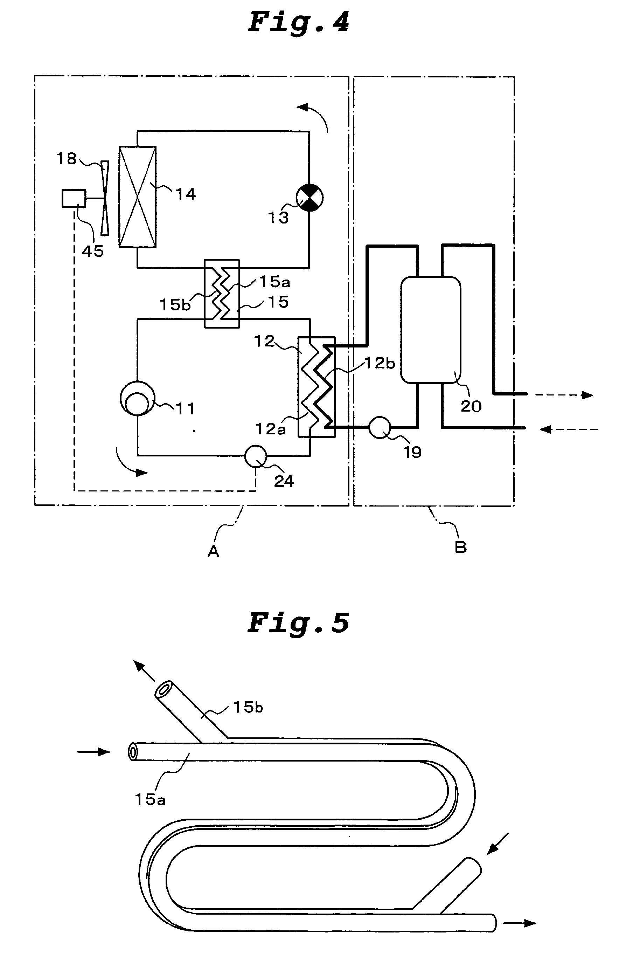

Fig. 4 is a block diagram showing the refrigeration cycle apparatus of a fourth embodiment of the invention. Fig. 5 is a block diagram of an internal heat exchanging means shown in Fig. 4. In the fourth embodiment, the same constituent elements as those of the first embodiment are designated with the same symbols, explanation thereof will omitted, and the structure and the operation of the fourth embodiment which are different from those of the first embodiment will be explained.

The refrigeration cycle apparatus of the fourth embodiment has a fan control apparatus 45 which controls the fan 18 of the evaporator 14 based on a pressure detected by the pressure detecting apparatus 24. In the internal heat exchanging means 15 shown in Fig. 5, a portion of a copper pipe which connects the outlet of the radiator 12 (refrigerant passage 12a) and the inlet of the decompressor 13 to each other is formed as the high pressure side refrigerant passage 15a, a portion of a copper pipe which connects the outlet of the evaporator 14 and the inlet of the compressor 11 is formed as the low pressure side refrigerant passage 15b, and these copper pipes are connected to each other by brazing. It is preferable that the high pressure side refrigerant and the low pressure side refrigerant which respectively flow through the high pressure side refrigerant passage 15a and the low pressure side refrigerant passage 15b flow in an opposed flow manner as shown in Fig. 5.

Next, the operation of the refrigeration cycle apparatus having the above-described structure will be explained.

The refrigeration cycle apparatus of the fourth embodiment is not provided with the bypass circuit 16 and the first solenoid valve 17 of the first embodiment. Therefore, in a normal operating state, heat is exchanged between the refrigerant flowing through the high pressure side refrigerant passage 15a and the refrigerant flowing through the low pressure side refrigerant passage 15b in the internal heat exchanging means 15, but this heat exchange amount is not so great.

On the other hand, when the temperature of fluid flowing into the fluid passage 12b of the radiator 12 becomes high and the highpressure side pressure rises to about the designpressure, the temperature of refrigerant flowing into the high pressure side refrigerant passage 15a of the internal heat exchanging means 15 is also increased. Thus, a temperature difference between the refrigerant flowing through the high pressure side refrigerant passage 15a and the refrigerant flowing through the low pressure side refrigerant passage 15b is increased, and the heat exchange amount is increased. Therefore, the refrigerant flowing through the high pressure side refrigerant passage 15a is more cooled, the density of the high pressure side refrigerant is increased and thus, even if the hold amount on the high pressure side is the same, the high pressure side pressure can be reduced.

In the refrigeration cycle apparatus having the above structure, the following effects can be obtained. That is, even if the refrigerant amount adjusting means such as the receiver and the accumulator is not provided, when the temperature of fluid flowing into the fluid passage 12b of the radiator 12 becomes high and the high pressure side pressure rises to about the design pressure, the heat exchange amount of the internal heat exchanging means 15 is increased. Therefore, the refrigerant between the outlet of the radiator 12 (refrigerant passage 12a) and the inlet of the decompressor 13 can be cooled by the refrigerant between the outlet of the evaporator 14 and the inlet of the compressor 11, and the density of the high pressure side refrigerant is increased. Thus, even if the hold amount on the high pressure side is the same, the high pressure side pressure can be reduced. Therefore, it is possible to suppress the abnormal rise of the high pressure side pressure, and to reduce the apparatus in size without deteriorating the reliability.

Further, in order to increase the heat exchange amount between the refrigerant flowing through the high pressure side refrigerant passage 15a and the refrigerant flowing through the low pressure side refrigerant passage 15b, the number of revolutions of the fan 18 of the evaporator 14 is controlled, by the pressure detecting apparatus 24 and the fan control apparatus 45, so as to be reduced. In this case, since the evaporating temperature in the evaporator 14 is lowered, the temperature of refrigerant flowing into the low pressure side refrigerant passage 15b of the internal heat exchanging means 15 is also lowered.. Thus, the temperature difference between the refrigerant flowing through the high pressure side refrigerant passage 15a and the refrigerant flowing through the low pressure side refrigerant passage 15b is increased, and the heat exchange amount is increased.

In the refrigeration cycle apparatus having the above structure, the following effects can be obtained. That is, even if the refrigerant amount adjusting means such as the receiver and the accumulator is not provided, when the high pressure side pressure rises to about the design pressure, the heat exchange amount of the internal heat exchanging means 15 is increased by reducing the number of revolutions of the fan 18 of the evaporator 14. Therefore, the refrigerant between the outlet of the radiator 12 (refrigerant passage 12a) and the inlet of the decompressor 13 can be cooled by the refrigerant between the outlet of the evaporator 14 and the inlet of the compressor 11, and the density of the high pressure side refrigerant is increased. Thus, even if the hold amount on the high pressure side is the same, the high pressure side pressure can be reduced. Therefore, it is possible to suppress the abnormal rise of the high pressure side pressure, and to reduce the apparatus in size without deteriorating the reliability.

The fan control apparatus 45 which controls the fan 18 of the evaporator 14 shown in Fig. 4 can be applied to the refrigeration cycle apparatus of any of the first to fourth embodiments. The internal heat exchanging means 15 shown in Fig. 5 can also be used as the internal heat exchanging means 15, 21 and 31 in the first to fourth embodiments.

According to the refrigeration cycle apparatus according to the present invention, even if refrigerant amount adjusting means such as the receiver and the accumulator is not provided, the high pressure side pressure can be reduced by increasing the density of the high pressure side refrigerant by the internal heat exchanging means. Therefore, it is possible to suppress the abnormal rise of the high pressure side pressure, and to reduce the apparatus in size without deteriorating the reliability.

### Industrial Applicability

The refrigeration cycle apparatus according to the present invention are suitable for a water heater, a domestic air conditioner, a vehicle air conditioner and the like which use a refrigerant (e.g., R32, carbon dioxide, ethane, ethylene, nitric oxide and a mixed refrigerant including these elements) in which a high pressure side of a refrigeration cycle can be brought into a supercritical state. The invention can provide a refrigeration cycle apparatus that can be reduced in size without deteriorating its reliability.

## Claims

1. A refrigeration cycle apparatus which uses a refrigerant that can be brought into a supercritical state on a high pressure side and which comprises a compressor, a radiator, a decompressor and an evaporator, and which does not have refrigerant amount adjusting means, wherein the refrigeration cycle apparatus further comprises internal heat exchanging means for cooling the refrigerant between an outlet of said radiator and an inlet of said decompressor.

2. The refrigeration cycle apparatus according to claim 1, wherein said internal heat exchanging means cools the refrigerant between the outlet of said radiator and the inlet of said decompressor by means of a refrigerant between an outlet of said evaporator and an inlet of said compressor.

3. The refrigeration cycle apparatus according to claim 1, wherein said internal heat exchanging means cools the refrigerant between the outlet of said radiator and the inlet of said decompressor by means of a refrigerant between an outlet of said decompressor and an inlet of said evaporator.

4. The refrigeration cycle apparatus according to claim 1, wherein said internal heat exchanging means cools the refrigerant between the outlet of said radiator and the inlet of said decompressor by means of a portion of a refrigerant coming out from said radiator and decompressed by a second decompressor.

5. The refrigeration cycle apparatus according to claim 1, further comprising pressure detecting means for detecting a high pressure side pressure, and control means which substantially operates said internal heat exchanging means when a pressure detected by said pressure detecting means rises to about a design pressure.

6. The refrigeration cycle apparatus according to claim 2, further comprising a bypass circuit for bypassing said internal heat exchanging means, a first solenoid valve which controls a flowof a refrigerant in saidbypass circuit, pressure detecting means for detecting a high pressure side pressure, and control means for closing said first solenoid valve when a pressure detected by said pressure detecting means rises to about a design pressure.

7. The refrigeration cycle apparatus according to claim 3, further comprising a bypass circuit for bypassing said internal heat exchanging means, a second solenoid valve which controls a flow of a refrigerant in saidbypass circuit, pressure detecting means for detecting a high pressure side pressure, and control means for closing.said second solenoid valve when a pressure detected by said pressure detecting means rises to about a design pressure.

8. The refrigeration cycle apparatus according to claim 4, further comprising pressure detecting means for detecting a high pressure side pressure, and control means which adjusts an opening of said second decompressor when a pressure detected by saidpressure detectingmeans rises to about a designpressure.

9. The refrigeration cycle apparatus according to any one of claims 1 to 4, further comprising pressure detecting means for detecting a high pressure side pressure, and control means which reduces the number of revolutions of a fan of said evaporator when a pressure detected by said pressure detecting means rises to about a design pressure.
